(19) Europäisches Patentamt
European Patent Office
Office européen des brevets

(11) **EP 1 708 338 B1**

(12) **EUROPÄISCHE PATENTSCHRIFT**

(45) Veröffentlichungstag und Bekanntmachung des Hinweises auf die Patenterteilung:
**04.05.2011 Patentblatt 2011/18**

(21) Anmeldenummer: **06003915.3**

(22) Anmeldetag: **27.02.2006**

(51) Int Cl.:
*H02K 3/18* (2006.01)  *H02K 21/22* (2006.01)
*H02K 16/00* (2006.01)  *H02K 16/04* (2006.01)
*H02K 29/03* (2006.01)  *H02P 6/08* (2006.01)

(54) **Elektrische Maschine**

Electric machine

Machine électrique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **31.03.2005 DE 102005014664**

(43) Veröffentlichungstag der Anmeldung:
**04.10.2006 Patentblatt 2006/40**

(73) Patentinhaber: **Wyremba, Hans-Peter**
**86929 Penzing (DE)**

(72) Erfinder: **Wyremba, Hans-Peter**
**86929 Penzing (DE)**

(74) Vertreter: **Mollekopf, Gerd Willi**
**Patentanwälte**
**Kahler Käck Mollekopf**
**Vorderer Anger 239**
**86899 Landsberg a. Lech (DE)**

(56) Entgegenhaltungen:
| | |
|---|---|
| **EP-A- 0 347 310** | **EP-A- 0 375 228** |
| **EP-A- 0 497 317** | **EP-A- 0 895 337** |
| **EP-A- 1 447 901** | **EP-A2- 1 289 097** |
| **DE-A1- 2 208 854** | **DE-A1- 3 226 547** |
| **DE-A1- 4 025 557** | **DE-A1- 4 218 888** |
| **DE-A1- 4 237 343** | **DE-C- 669 599** |
| **FR-A- 2 861 226** | **US-A- 4 520 300** |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen elektronisch kommutierten Gleichstrommotor oder Generator sowie eine Generatoranordnung.

Die EP 0497317 A1 offenbart eine als Aussenläufer arbeitende elektrische Maschine mit zwei Statoren. Jeder Stator weist Wicklungszähne mit in Reihe geschalteten Wicklungen auf, wobei die Statoren zueinander um die Hälfte der Breite eines Poles versetzt sind. Jedes Ständerpaket ist unbewegbar an einem Lagerschild befestigt und zwischen den Ständerpaketen verläuft ein unbewegbar mit der Läuferwelle verbundener T-förmiger Ring. Seitlich an jedem Flügel des T-förmigen Rings sind Magnete um die Ständerpakete radial rumlaufend angeordnet. Je Ständerpaket sind jeweils separate Magnete vorgesehen.

Die EP 1 289 097 A2 betrifft einen Wechselstrommotor mit drei hintereinander liegenden Statorpaketen mit jeweils nur einer Wicklung, wobei die aus der einen Wicklung abgeleiteten Statorsegmente eines Statorpakets jeweils zu den Statorsegmenten der anderen Statorsegmente winkelversetzt sind. Die Spulen sind wie Helmholtzspulen durchgängig um die (Dreh-) Achse gewickelt, jeweils für eine Phase separat. Die über den Umfang verteilten Pole der Statorsegmente entstehen durch Eisenkern-Platten, die nicht entlang des Umfangs durchgängig ausgebildet sind, sondern als beabstandete Einzelsegmente.

Es ist Aufgabe der Erfindung einen Gleichstrommotor oder Generator einfacher Bauart vorzusehen, die ein besonders hohes Leistung/Größen-Verhältnis bereitstellt. Des weiteren ist es Aufgabe, eine Generatoranordnung mit einem solchen Generator vorzusehen.

Diese Aufgabe wird erfindungsgemäß mit den Merkmalen des Anspruchs 1 bzw. 10 gelöst.

Vorteilhafte Ausgestaltungen sind Gegenstand von Unteransprüchen.

Gemäß Anspruch 1 weist ein Gleichstrommotor oder Generator zumindest einen esten und zweiten Stator auf. Jeder Stator weist eine Vielzahl von Wicklungszähnen mit Wicklungen auf, wobei alle Wicklungen - zumindest magnetisch gesehen - in Reihe geschaltet sind. D.h. es genügt ein einziger Wicklungsdraht, um alle Wicklungszähne eines Stators zu bewickeln. "Wicklung" an einem der Wicklungs- bzw. Statorzähne bedeutet entweder eine Vielzahl von Wicklungsschlingen eines Wicklungsdrahtes, die zunächst um einen Wicklungszahn gewickelt sind, und dann in einer Vielzahl von Wicklungsschlingen, die z.B. um den benachbarten Wicklungszahn gewickelt sind. Oder die "Wicklungen" werden durch eine Vielzahl von Schlaufen zusammengesetzt, die sich zwischen den Wicklungszähnen durchwinden. Besonders wenn der Wicklungsdraht von einem Wicklungszahn zu dessen benachbartem Wicklungszahn fortgeführt ist oder die Schlaufen von Wicklungszahn zu Wicklungszahn geführt sind, ohne einen

Wicklungszahn auszulassen, entstehen keine "inaktiven" Abschnitte des Wicklungsdrahtes, so dass die Ausnutzung des magnetischen Flusses zum Antrieb oder zur Stromerzeugung 100% ist.

Am Rotor ist eine Vielzahl von Permanentmagneten mit alternierender Polarität Vorteilhaft ist zusätzlich angeordnet eine Vielzahl von bewickelten Rotorwicklungszähnen mit alternierender Wicklungsrichtung angeordnet und es sind die Rotorwicklungszähne mit den Permanentmagneten kombiniert. Vorteilhaft sind die Wicklungen an den Rotorzähnen in Reihe geschaltet - entsprechend der Reihenschaltung bei den Wicklungen an jedem der Statoren.

Die Statoreinheit ist zumindest zweiteilig zusammengesetzt aus zumindest einem ersten und zweiten Stator mit jeweils einer Vielzahl von Wicklungszähnen, wobei die Wicklungszähne zueinander winkelversetzt angeordnet sind. Auch Bauformen mit drei oder vier Stator einheiten sind bezüglich der Kompaktheit der Abmessung bei hoher Motor- und/oder Generatorleistung noch gut einsetzbar.

Ganz besonders vorteilhaft weist der Rotor nur Permanentmagnete auf, so dass nur die Kontaktierung des oder der Wicklungsdrähte des oder der Statoren erforderlich ist, was über eine feststehende Verbindung erfolgt.

Besonders vorteilhaft sind die Wicklungszähne der Statoren symmetrisch zueinander winkelversetzt. Durch den Winkelversatz der Statoren zueinander ergibt sich bei Nutzung der elektrischen Maschine als Motor ein verringertes Anlaufinoment und die Laufrichtung lässt sich durch Anlegen einer Spannung an die Wicklung des geeigneten Stators vorgeben. Beim Generator ist die Differenz zwischen minimaler und maximaler gleichgerichteter Spannung um so kleiner, je größer die Anzahl der winkelversetzten Statoren (Rotoren) ist.

Fertigungstechnisch ist es kostengünstig die Statoreinheiten jeweils als Module identisch oder nahezu identisch vorzufertigen und zur Endfertigung des Motors und/oder Generators diese Module je noch gewünschter Stator (modul-) zahl zusammenzusetzen.

Ausführungsbeispiele werden anhand von Figuren erläutert. Die Figuren 1A bis 7B dienen des Erläuterung des Erfindung und zur Darstellung des Prinzipien. Die Figuren 8 bis 15 betreffen die Erfindung und Ausgestaltungen.

Fig. 1A          eine schematische, perspektivische Darstellung eines Generators,

Fig. 1B          eine Draufsicht des Generators von Fig. 1A mit Bewicklung,

Fig. 2A          ein vereinfachtes Ersatzschaltbild des Generators von Fig. 1A,

Fig. 2B     eine gestreckte Darstellung des Stators und Rotors des Generators von Fig. 1A,

Fig. 3     ein Ersatzschaltbild des Generators von Fig. 1A bei Einsatz als Gleichstromgenerator,

Fig. 4     eine schematische Darstellung der Bewicklung des Stators des Generators von Fig. 1A gemäß einer ersten Ausführung,

Fig. 5     eine schematische Darstellung der Bewicklung der Statoren des Generators von Fig. 1 gemäß einer zweiten Ausführung,

Fig. 6     die Bewicklung von Fig. 5 in perspektivischer Darstellung,

Fig. 7A und 7B     einen Stator für den Generator von Fig. 1 in einer zweiten Ausführung in Draufsicht und perspektivischer Ansicht,

Fig. 8 und 9     eine Frontansicht und perspektivische Ansicht eines erfindungsgemäßen Generators bzw. Motors mit einem Doppel-Stator,

Fig. 10A     eine schematische, gestreckte Darstellung des Doppel-Stators von Fig. 9 mit Bewicklung,

Fig. 10B     eine schematische Seitenansicht zum Stator entsprechend Fig. 10A,

Fig. 10C     ein zeitliches Spannungs- und Positionsdiagramm zur Veranschaulichung der Magnetstellung und angelegten Spannung bei Betrieb als Motor,

Fig. 10D     eine der Fig. 10B entsprechende Seitenansicht bei Einsatz des Stators von Fig. 1A anstelle des Stators von Fig. 9,

Fig. 11     ein Blockschaltbild einer Motoreinheit unter Verwendung des Generators von Fig. 9 zum Betrieb als Antriebsmotor und Generator,

Fig. 12     ein Blockschaltbild einer Ausführungsform der Anordnung von Fig. 11 mit einem vereinfachten Gleichrichteraufbau,

Fig. 13     eine vergrößerte Teildarstellung der Fig. 12,

Fig. 14     ein Zeitdiagramm der von den beiden Statorwicklungen abgegriffenen und gleichgerichteten Generatorspannung, und

Fig. 15     eine weitere Ausführungsform der Teilschaltung von Fig. 13 mit einer Reglereinheit.

Die nachfolgend beschriebene elektrische Maschine ist sowohl als Außenläufer als auch als Innenläufer verwendbar. Die in den Figuren dargestellten Ausführungsbeispiele sind der Einfachheit halber als Außenläufer und als zwölfpolige Maschine dargestellt. Als Permanentmagnete werden vorteilhaft Neodymstäbe eingesetzt. In Abhängigkeit der technischen Voraussetzungen sind jedoch auch andere Magnetmaterialien einsetzbar.

Das Funktionsprinzip des Grundbeispiels dieser Maschine basiert auf der proportionalen Abfolge von Läuferpolen und Statorpolen die am jeweiligen Umfang gleichmäßig verteilt sind. Im Normalfall wird eine gerade Anzahl von Polen eingesetzt. Die Anzahl der Pole kann ggf. recht hoch sein, um höhere Frequenzen oder auch bessere Laufeigenschaften der elektrischen Maschine zu erzielen. Die hohe mögliche Anzahl von Polen erzeugt eine entsprechend hohe Frequenz der Ausgangsspannung. Diese ermöglicht in Verbindung mit einem Brückengleichrichter, bereits schon durch recht kleine Glättungskondensatoren, eine sehr saubere Gleichspannung ohne die Erzeugung von hochfrequenten Störungen wie es bei Kollektorgeneratoren der Fall ist.

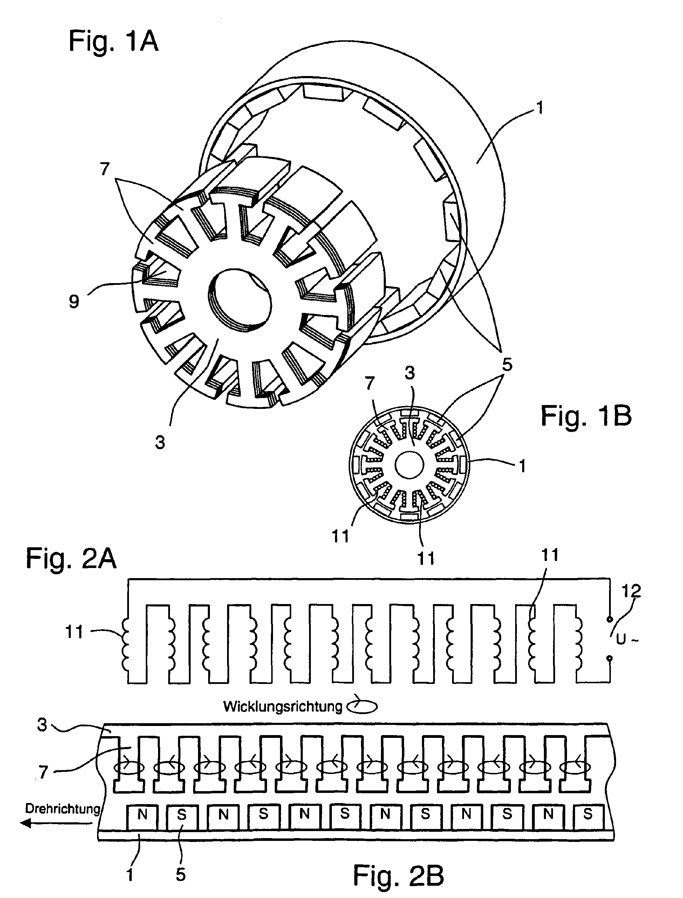

**Verwendung als Generator (Fig. 1A-7) -** Grandprinzip zur Erläuterung

Die Fig. 1A und 1B zeigen am Beispiel eines zwölfpoligen Generators einen Rotor 1 und in Fig. 1A einen unbewickelten Stator 3 in dreidimensionaler Darstellung. Der Rotor 1 ist mit gleichbeabstandeten Permanentmagneten 5 versehen, die abwechselnd als Nord- und Südpol zur Achse ausgerichtet montiert sind. Der Stator 3 besitzt in diesem Fall die gleiche Anzahl von Zähnen 7 wie der Rotor 1. Die Zähne werden auch häufig als Anker, Stege oder Pole bezeichnet und die Wicklungen darauf als Ankerwicklung. Hier sind es zwölf Magnete 5 und zwölf gleichbeabstandete Zähne 7. Die Statorzähne 7 werden abwechselnd linkssinnig und rechtssinnig mit Wicklungen 11 bewickelt, die alle in Reihe geschaltet sind. Die in der Querschnittsansicht von Fig. 1B dargestellten Wicklungen 11 werden in dieser Variante wie üblich über die einzelnen Zähne 7 aufgewickelt. D.h. in diesem Fall wird erst die komplette Wicklung an einem Zahn 7 ausgebildet, bevor die Wicklung am nächsten Zahn vollständig ausgebildet wird. Deutlich herauszustellen ist hierbei die sich abwechselnde Anordnung der Statorpole 7 sowie in gleicher Weise die der Läuferpole 5. Dies ermöglicht die Serienschaltung aller Wicklungen 11, da durch die gleiche Anzahl der Magnetpole und der Statorpole oder Statorzähne bei einer Drehung des Rotors 1 durch das Überstreichen der Rotorpole über die Statorzähne, in jeder Statorspule bzw. Wicklung 11 eines Statorzahnes 7 eine Induktionsspannung erzeugt wird. Die Wicklungen müssen allerdings abwechseln gegensinnig auf die Statorzähne gewickelt oder aber entsprechend verschaltet sein, da sich auf dem Rotor 1 ebenso abwechselnd gepolte Magnetpole 5 befinden.

Fig. 2A zeigt die Wicklungsorientierung des zwölfpoligen Generators von Fig. 1A dieser Bauart in einer abgewickelten Darstellung als Ersatzschaltbild. Fig. 2B zeigt schematisch in abgewickelter Darstellung die Abfolge von Magneten 5 und gegenüberliegenden Zähnen 7 mit alternierender Wicklungsrichtung. Der Rotor 1 ist wie vorweg beschrieben mit abwechselnden Permanentmagneten versehen. Der Stator 3 besitzt die gleiche Anzahl Zähne wie der Rotor. Die Statorzähne sind abwechselnd linkssinnig und rechtssinnig bewickelt. Durch das stetige Wechseln der Polrichtung bei der Drehung des Rotors wird in den Wicklungen des Stators, durch die Bewicklung der Zähne in wechselnder Richtung, stets die gleiche Spannungsrichtung induziert. Die Wicklungen können daher alle in Reihe geschaltet werden.

Es entsteht somit ein Gleichtakt der Induktionsspannungen aller Statorwicklungen. Wie in Fig. 2A dargestellt, wird am Wechselspannungsabgriff 12 die Wechselspannung U~ als Summe aller Induktionsspannungen der zwölf Wicklungen abgegriffen. Die Frequenz $f$ der durch die Drehung erzeugten Wechselspannung U~ ist wie folgt:

$$f = (\text{Anzahl der Statorpole}) / 2 * \text{Rotordrehzahl}$$

mit Rotordrehzahl in U/min / 60 und $f$ in Hz.

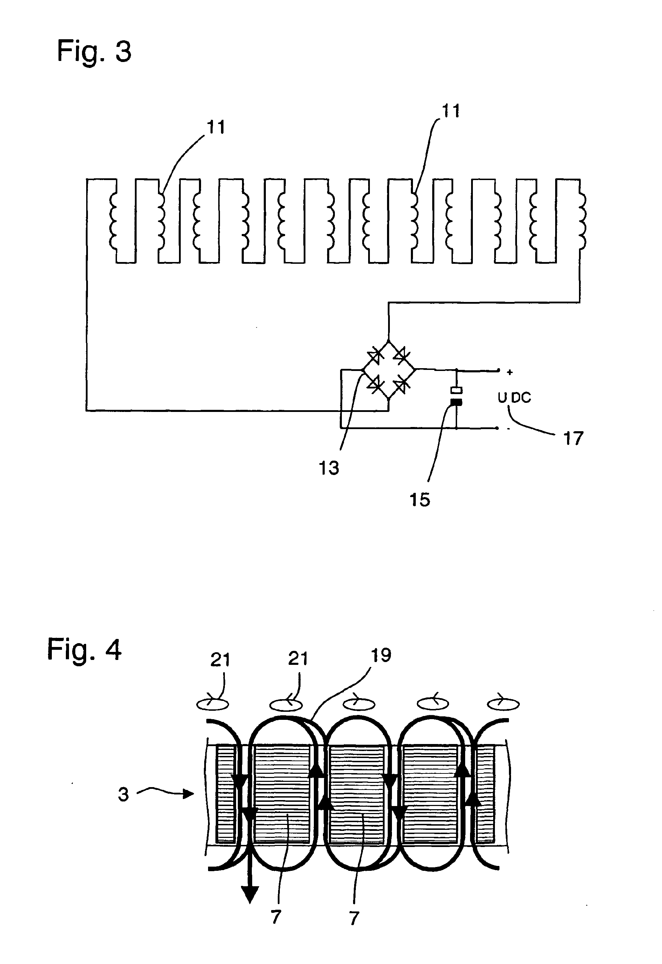

Wie in Fig. 3 dargestellt, ist es durch das Nachschalten eines Gleichrichters 13 möglich, direkt ohne weitere Hilfsmittel aus der Wechselspannung U~ eine Gleichspannung $U_{DC}$ an einem Gleichspannungsabgriff 17 zu erzeugen. Mit zunehmender Anzahl der Pole sind recht hohe Frequenzen erreichbar, was zu sehr guten Glättungsergebnissen schon mit recht kleinen Glättungskondensatoren 15 führt.

Vorteile des vorweg beschriebenen Generators:

- bei dieser Ausführung ist der Generator bürstenlos (außer in weiterer Ausgestaltung ist der Rotor zur Regelung mit Erregerwicklungen versehen);
- die hohe Ausgangsfrequenz ermöglicht eine gute Glättung schon bei kleinen Drehzahlen und bereits mit recht kleinen Kondensatoren (Gleichstromgenerator);
- er ist sehr einfach und kostengünstig zu bewickeln;
- durch die einfache Bauweise ist er ideal für einfache Anwendungen w. z.B. Fahrraddynamo;
- er besitzt eine sehr kompakte Bauweise und ist dadurch sehr klein und leicht;
- bis auf die Zuleitungen ist das gesamte Kupfer der Wicklung am Statorzahn wirksam, er besitzt daher auch einen sehr hohen Wirkungsgrad;
- diese Bauform erfordert nur zwei Zuleitungen pro Statorscheibe.

Wechselrichtungsbewicklung:

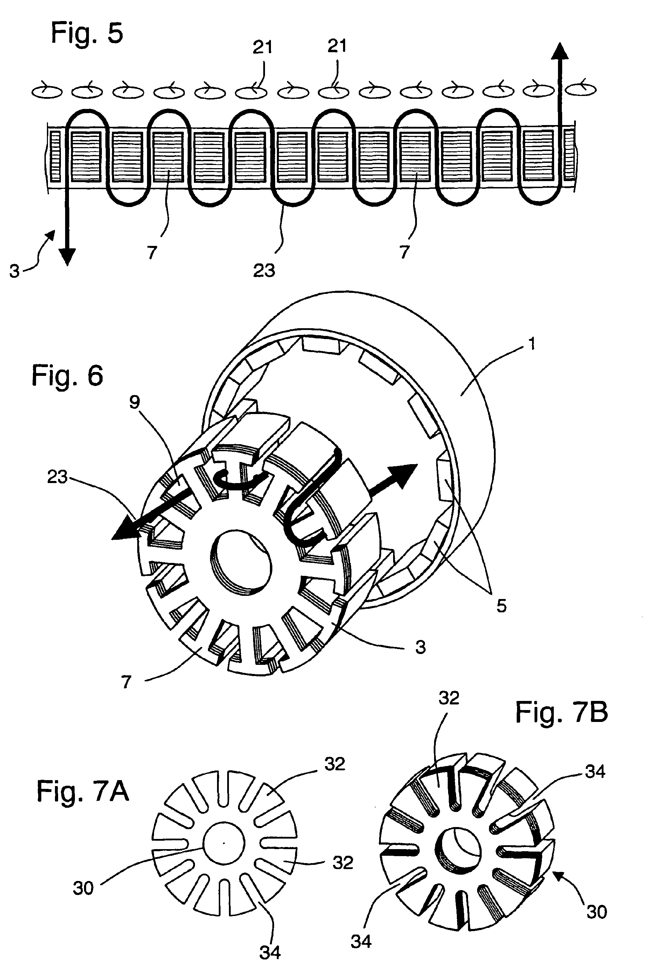

Die serielle Anordnung der Pole auf dem Stator 3 ermöglicht weiterhin eine besondere Wickelweise der Erregerwicklungen 11, wie sie in Fig. 4 und 5 verdeutlicht ist. Da durch die wechselnde Anordnung der Läuferpole 7 eine wechselnde Wickelrichtung gefordert ist, treffen immer gleiche Stromrichtungen in einer Statornut 9 zwischen den Zähnen 7 zusammen. Dies ermöglicht eine neue Wicklungsart, welche separate Verbindungen zwischen den einzelnen Wicklungen 11 von Zahn 7 zu Zahn überflüssig macht. Gewickelt wird in abwechselnder Richtung durch die einzelnen Nuten 9 bzw. Spalten, ringweise über den gesamten Stator 3 bis zur gewünschten Füllung der Nuten. Damit sind alle Wicklungen 11 automatisch in Serie geschaltet. Ein erheblicher Vorteil ist hierbei das Fehlen jeglicher Verbindungsleitungen zwischen den Polwicklungen, was den Wirkungsgrad dieser elektrischen Maschine erheblich steigert. Des weiteren lässt sich auch eine erhebliche Kostenreduktion durch die einfache Bewicklung erreichen.

Fig. 4 zeigt in einer abgewickelten Darstellung des Stators 3 das Zusammentreffen der gleichen Stromrichtungen der Wicklungen 11 benachbarter Statorzähne 7 in den Nuten 9 bei einer wechselnden Bewicklung der Statorzähne mit einem Wicklungsdraht 19. Die Symbole zum Bezugszeichen 21 veranschaulichen wiederum die abwechselnden Induktionsrichtungen der Reihenwicklung und der daraus resultierenden Einzelwicklungen 11 in Bezug auf einen Zahn 7. Fig. 5 zeigt in der gleichen Darstellungsweise des Stators wie in Fig. 4 die neue Bewicklungsmethode für den Stator 3, wobei ein Wicklungsdraht 23 mäander- oder schleifenförmig zwischen den Zähnen verläuft. Die Wicklung wird, wie dargestellt, schlangenförmig durch die Statornuten 9 geführt. Dies wird mit dem Draht 23 solange ringförmig über den Umfang des Stators fortgeführt bis der gewünschte Füllungsfaktor der Statornuten erreicht ist. Natürlich ist diese 'umlaufende' Umwicklung der Zähne nur bei geradzahliger Zahnanzahl eines Stators möglich. Fig. 6 zeigt in einer dreidimensionalen Darstellung die in Fig.5 beschriebene neue Wicklungsweise.

Vorteile der vorweg beschriebenen Wechselrichtungsbewicklung des Generators:

- Sie ermöglicht eine einfache, schnelle, auch maschinelle Bewicklung der Statorzähne. Diese Bewicklungsmethode ist daher sehr kostengünstig.
- Bis auf die Zuleitungen liegt das gesamte Kupfer der Wicklung wirksam am Statorzahn. Eine so bewickelte elektrische Maschine besitzt daher einen sehr hohen Wirkungsgrad.
- Durch die einfache Bauweise ideal für einfache Anwendungen w. z.B.

Fahrraddynamo.

- Sie erfordert ebenfalls nur zwei Zuleitungen pro Statorscheibe.
- Diese Bewicklungsmethode kann ebenso in mehrscheibigen elektrischen Maschinen eingesetzt werden, wie nachfolgend beschrieben.

Bei Einsatz eines stromerregten Rotors unter Verwendung von Schleifringen ist es möglich den Rotor in gleicher Weise auszuführen und zu bewickeln. Bei einer hier nicht dargestellten Ausführung kann der Rotor 1 zusätzlich zu den Permanentmagneten 5 Feldwicklungen aufweisen, die vorteilhaft ebenso um Zähne des Rotors gewickelt werden wie die in Fig. 5 dargestellten Wicklungen um die Zähne 7 des Stators. D.h. vorteilhaft ist eine Rotorwicklung vorgesehen, die - wie die Statorwicklung 11 um die Statorzähne 7 - um Rotorzähne gewickelt ist. Dabei können die Rotorzähne Permanentmagnete aufweisen oder aus Permanentmagneten gebildet sein. Im Falle der Kombination von Permanentmagneten mit der Rotorbewicklung entspricht die Abfolge der Bewicklungsrichtungen der Rotorwicklung der Abfolge der Polaritäten der Permanentmagnete (alternierend), so dass in Abhängigkeit der Stromrichtung und -stärke des Stroms durch die Rotorwicklung das Magnetfeld der Permanentmagnete verstärkt oder abgeschwächt wird. Die beiden Enden der Rotorwicklung sind vorteilhaft elektrisch über unterbrechungsfreie Schleifkontakte (Umpolung ist nicht erforderlich) mit der Versorgungsspannung verbunden. Wahlweise kann einer oder können beide elektrischen Verbindungen über die Lagerung des Rotors erfolgen.

In weiterer Ausgestaltung ist der Generator/Motor als Innenläufer ausgebildet, bei dem dann die Wicklungen ebenfalls um nach innen vorspringende Zähne des äußeren Stators nach diesem Schema aufgewickelt sind.

Wechselrichtungsbewicklung in geraden Nuten:

Die Wicklungsnuten können hierbei gerade ausgearbeitet werden, was die Bewicklung nochmals stark vereinfacht. Fig. 7A zeigt eine Querschnittsansicht einer Ausgestaltung eines Stators 30, bei der in Abweichung vom zuvor dargestellten Stator 3, anstelle der T-förmigen Statorzähne 7 sich strahlenförmig verbreiternde Statorzähne 32 mit dazwischenliegenden, geraden Nuten 34 vorgesehen ist. Fig. 7B zeigt den Stator 30 in perspektivischer Darstellung. Die Wicklungsnuten 34 weisen in radiale Richtung verlaufend im wesentlichen einen gleichen Querschnitt auf, was die Bewicklung nochmals stark vereinfacht. In Ausgestaltung können die Nuten 34 zur Sicherung der Wicklungen gegen ein Herausgleiten aus den Nuten 34 mit einem Sicherungsplättchen abgeschlossen werden.

Bei Einsatz eines stromerregten Rotors unter Verwendung von Schleifringen ist es möglich den Rotor in gleicher Weise auszuführen und zu bewickeln.

Reduzierung der Rastmomente durch Winkelversatz zweier hintereinander gesetzter Statorscheiben:

Montiert man zwei oder mehr der vorweg beschriebenen Generatoren hintereinander und in einem entsprechenden Winkel versetzt, z.B. bei zwei Systemen um den halben Winkel des Zahnversatzes, mechanisch zusammen, so heben sich die Rastmomente zum größten Teil auf. Die Rotoren besitzen zueinander keinen Versatz, so dass diese als ein durchgehender über alle Statoren streichender Rotor ausgebildet werden kann. Die so zusammengesetzte elektrische Maschine, bestehend aus zwei oder mehr derart winkelversetzter Generatoren, besitzt erheblich geringere Anlaufmomente und lässt sich daher erheblich leichter andrehen, was z.B. bei Verwendung in Windkraftanlagen von erheblichem Vorteil sein kann. Die Wicklungen jedes Stators bleiben hierbei separat und werden erst extern, z.B. über zwei oder mehrere Gleichrichter zusammengeschaltet.

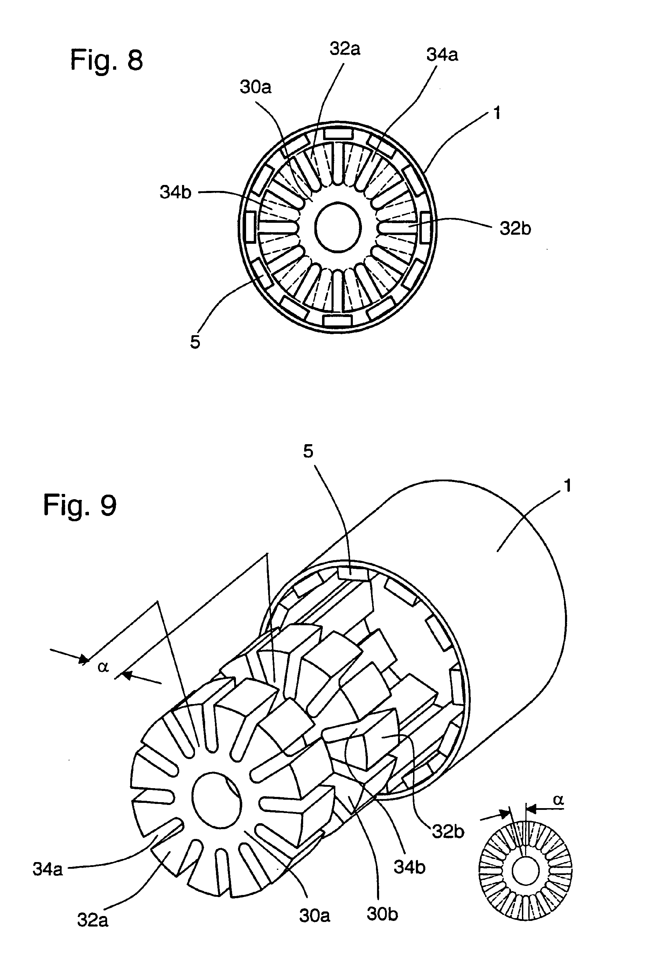

Die Fig. 8 und 9 zeigen als Ausführungsbeispiel der Erfindung die mechanische Kopplung von zwei Einzel-Generatoren. Ein vorderer und ein hinterer Stator 30a, 30b sind um den halben Winkel $\alpha$ mechanisch versetzt, wobei der Winkel $\alpha$ der Winkel zwischen zwei benachbarten Polen bzw. Statorzähnen 32a oder 32b ist. Die Mittelachse eines Statorzahns 32a des vorderen Stators 30a fällt somit auf eine Nut 34b des hinteren Stators 30b. Die Rotoren sind ohne Winkelversatz mechanisch gekoppelt, wobei hier ein durchgängiger Rotor 1 mit sich über die axiale Tiefe beider Statoren 30a, b erstreckenden Magneten 5 vorgesehen ist. Wenn also in dieser Anordnung die Rotorpole 5 der vorderen elektrischen Maschine direkt und mittig über den Statorzähnen 32a des vorderen Stators 30a stehen, befinden sich in der selben Stellung die Rotorpole 5 mittig zwischen den Statorzähnen 32b der hinteren elektrischen Maschine. Vorteilhaft sind beide Statoren 30a, b über eine Welle starr miteinander gekoppelt. Beide elektrische Maschinen bilden somit eine mechanische Einheit.

Vorteile des erfindungsgemäßen Generators mit dem beschriebenen Winkelversatz:

- Die Rastmomente sind erheblich reduziert.
- Das Verschalten zweier oder mehrerer Generatoren dieser Bauart, in Verbindung mit einer Gleichrichtung eines jeden Generators, erhöht die Qualität der generierten Gleichspannung und das Sieben mit Kondensatoren wird weiter vereinfacht.
- Ein in dieser Weise aufgebauter Generator kann gleichermaßen als Elektromotor eingesetzt werden (siehe nachfolgende Beschreibung).

Der in Verbindung mit Fig. 8 und 9 beschriebene Doppel-Generator mit Winkelversatz zwischen zwei oder mehreren Statoren 30a, b kann ebenso als bürstenloser Motor genutzt werden. Erforderlich ist hierzu eine elektronische Schaltung zur elektronischen Kommutierung.

Aufbau eines bürstenlosen Gleichstromelektromotors durch den Winkelversatz zweier oder mehrerer hintereinander gesetzter und mechanisch verbundener Statoren der vorweg beschriebenen Ausführunizen.

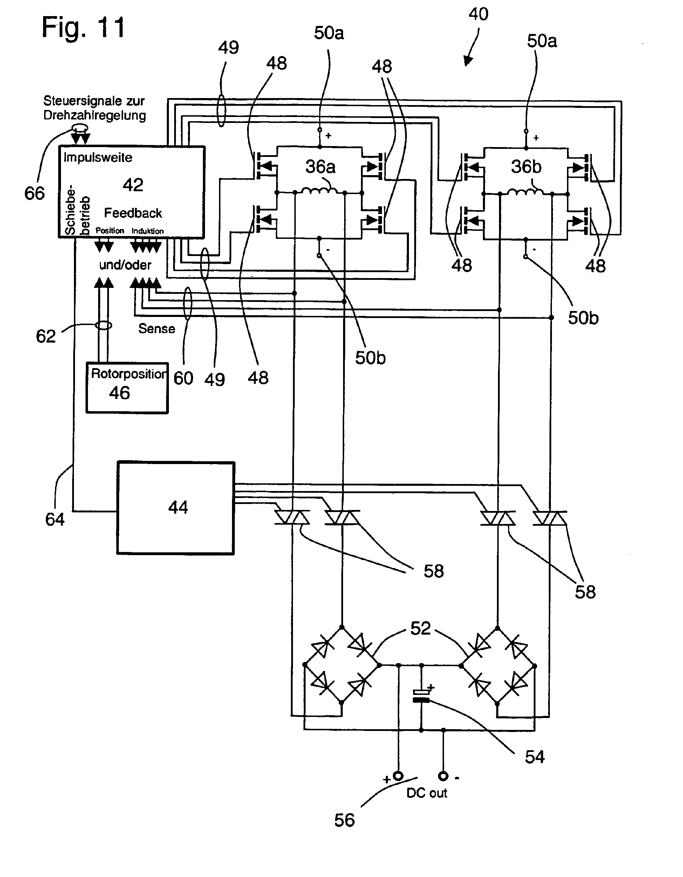

Durch den Winkelversatz $\alpha$ der Statoren 30a, b, von der Magnetpolmitte bis zum nächsten Magnetpolübergang (dies ist die Hälfte des Statorzahnwinkelversatzes), ergibt sich ein Zeitversatz der Magnetereignisse. Dies ermöglicht die Nutzung der dadurch entstehenden unterschiedlichen Magnetkräfte zur Generierung einer Drehbewegung. Es werden hierzu nach einem Muster, in der wie folgt beschrieben Weise, die Stromrichtungen in den seriellen Wicklungen der einzelnen Statoren, abwechselnd, kontrolliert und mit Hilfe einer Brückenschaltung umgepolt (siehe Fig. 11). Dies führt zu einer Drehbewegung in der, durch die Phasenlage der Wicklungserregung der Statorwicklungen zueinander, vorgegebenen Richtung. Verwendet man zwei hintereinander positionierte und seriell bewickelte Statoren, ist es in etwa vergleichbar mit der Fortbewegung mit Hilfe der Pedale eines Fahrrads, wobei am ersten Pedal gedrückt und am zweiten gezogen wird und umgekehrt. Die Statorwicklungen stoßen und ziehen die Magnetpole des Rotors schrittweise in eine Richtung. Hierzu ist es erforderlich, die Position der Rotormagnete per Sensor oder auch durch Messung der Induktionsspannungen in den Statorwicklungen, verursacht durch das Überstreichen der Magnetpole des Rotors, zu ermitteln.

Bei Verwendung von drei oder einer noch höheren Anzahl von hintereinander positionierten, im Winkel wie vorweg beschrieben versetzten Statoren bzw. Statorscheiben, ergeben sich noch weitere Verschaltungsmöglichkeiten der Statorwicklungen wie Sternschaltung, Dreieckschaltung usw..

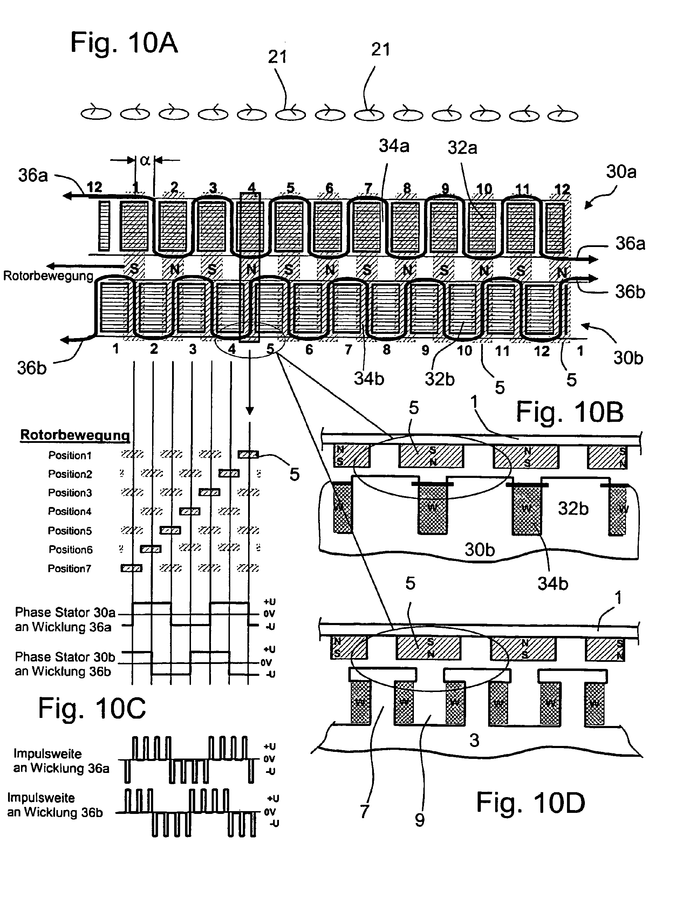

Fig. 10A zeigt in einer abgewickelten Darstellung mit Ansicht in radiale Richtung die Wicklungsweise des hier zur Erläuterung verwendeten zwölfpoligen, bürstenlosen Motors (s.a. Fig. 9). Fig. 10B zeigt die abgewickelte Darstellung in seitlicher Ansicht (aus axialer Richtung). Fig. 10C zeigt die zeitliche Steuerung der an die Wicklungsdrähte 36a, b angelegten Spannung und die Position der Wicklungszähne 32b zu den Permanentmagneten 5. Die Wicklungsdrähte 36a, b verlaufen wiederum umlaufend in den Nuten 34a, b um alle Statorzähne 32a, b. Ebenfalls hier gut zu sehen ist die mögliche schlängelnde Bewicklung der Statoren. Die Zähne 32a, b sind zur Verdeutlichung mit 1 bis 12 durchnummeriert. Auch hier ist zwischen den Statoren 30a und 30b ein Winkelversatz $\alpha$ wie oben beschrieben vorgesehen. Die Mitte eines Zahnes 32a von Stator 30a liegt auf gleicher Ebene wie die Nut 34b von Stator 30b. Die Magnete 5 des Rotors 1 besitzen keinen Winkelversatz zueinander und laufen somit durchgehend über beide Statoren 30a, b.

Das Diagramm der Rotorbewegung in Fig. 10C zeigt den zeitlichen Verlauf der Bewegung bzw. Position der Rotormagnete 5. Direkt darunter ist die Phase der an den Wicklungsdraht 36a des Stators 30a angelegten Spannung und darunter wiederum die Phase der am Wicklungsdraht 36b des Stators 30b angelegten Spannung dargestellt (bzw. Stromrichtung). Die in Fig. 10C dargestellten Spannungen sind die an die Wicklungen 36a, 36b angelegten Spannungen, wie sie z.B. durch die in Fig. 11 dargestellten Transistoren 48 an den Wicklungen 36a, 36b anliegen. Es ergibt sich ein Schaltversatz der dem Winkelversatz $\alpha$ der Statoren entspricht. Die Zeitdauer der Impulse ist abhängig von der Anzahl der Rotormagnete 5 sowie die der Statorzähne 32a, b.

Fig. 10B zeigt die Bewicklung bei Einsatz der im wesentlichen rechteckigen Nuten 34a, b (vgl. Fig. 7A), wobei wie angedeutet, die Wicklungen 36a, b bzw. W die Nuten vollständig auffüllen. Fig. 10D zeigt die Bewicklung bei Verwendung eines Stators 3, wie er in Fig. 1A oder 6 dargestellt ist.

Eine Ansteuerschaltung für den Motor ist unten unter Bezug auf Fig. 11 beschrieben.

Abwechselnder Generator- und Motorbetrieb mit ein und der selben elektrischen Maschine:

Die zuvor beschriebene Bauform erlaubt den Betrieb der elektrischen Maschine gleichermaßen als Generator und als Motor. Es bietet sich also an, dies z.B. bei Fahrzeugen sowohl als Antrieb als auch zur Energierückgewinnung zu nutzen. Erforderlich ist hierzu ein elektronischer Umschaltmechanismus, welcher z.B. beim Schiebebetrieb eines Fahrzeugs von Motor- auf Generatorbetrieb umschaltet. Die so in elektrische Energie umgewandelte Bewegungsenergie kann wieder der Antriebsbatterie oder dem Stromnetz zurückgeführt werden. Dabei hat der Generatorbetrieb auch eine bremsende Wirkung, was auf kontrollierte Weise zur Abbremsung genutzt werden kann.

Fig. 11 zeigt ein Blockschaltbild einer Motorantriebseinheit 40 mit einer entsprechenden Ansteuerung zum Antreiben und Energierückgewinnen. Ist lediglich eine Antriebssteuerung erforderlich, so kann der Aufbau durch Weglassen des Energierückgewinnungsteils vereinfacht werden. Bei der Motorantriebseinheit 40 sind die Wicklungen 36a, b bzw. die beiden separaten Statoren 30a, b (Fig. 9 und 10) elektronisch kommutiert. Für jede Statorscheibe 30a, b ist eine Brückenschaltung vorgesehen. Die Brückenschaltungen umfassen jeweils vier Leistungstransistoren oder LeistungsFETs 48, wie hier abgebildet. Die FETs erhalten ihre Gatesignale über Gateleitungen 49, die mit einem Controller 42 verbunden sind. Die Batteriespannung (z.B. bei Verwendung als Fahrzeugmotoren) liegt über die Anschlussklemmen 50a, b an den FETs 48 an.

Als Feedback zur Feststellung der Rotorposition bzw. der Magnetpolposition sind hier zwei Varianten dargestellt. In einer Ausführung sind den Magneten 5 ein oder mehrere Hallsensoren 46 oder optische Sensoren zugeordnet, um die relative Position des Rotors 1 gegenüber dem Stator 30a bzw. 30b festzustellen. Das Sensorsignal wird über Sensorleitungen 62 dem Controller 42 zur Steuerung zugeführt. Gemäß einer anderen Ausführung wird über die Wicklungsdrähte 36a, b die Induktionsspannung abgegriffen, welche insbesondere bei den Ein- und Ausschaltvorgängen generiert wird. Die Induktionsspannung beider Wicklungsdrähte 36a, b wird über Sense-Leitungen 60 dem Controller 42 zugeführt. Bei beiden Möglichkeiten der Positionserfassung lässt sich der Anfang, das Ende, die Geschwindigkeit sowie die Polung eines jeden Magneten feststellen. Im Controller 42 werden diese Signale erfasst und verwendet, um die entsprechenden Schaltmomente einzustellen und evtl. Korrekturen zur Phase vorzunehmen.

Am Controller 42 wird die gewünschte Drehzahl oder Leistung für den Motor über die Ansteuerleitungen 66 vorgegeben. Der Controller 42 ist vorteilhaft mit einer Impulsweitensteuerung versehen, um die Energie der den FETs zugeführten Rechtecksignale (siehe Phase der Spannungen an den Wicklungen 36a, b der Statoren 30a, b in Fig. 10C) den Anforderungen entsprechend anzupassen. Das in Fig. 10C oben gezeigte Spannungs-Rechtecksignal ("Phase Stator 30a und 30b") wird hierzu mit einer höheren Rechteckfrequenz überlagert, so dass das in Fig. 10C unten gezeigte Spannungssignal an die Wicklungen 36a, b angelegt wird ("Impulsweite an Wicklung 36a/36b" - wobei das Spannungssignal die über die Wicklungen 36a, 36b gemessene Spannung dargestellt). Diese höhere Rechteckfrequenz wird in seiner Impulsbreite verändert, der Energieinhalt damit variiert. Diese Aufgabe kann der Controller 42 in der hier dargestellten Schaltungsvariante übernehmen.

Im unteren Teil der Fig. 11 ist eine mögliche Erweiterung für die Rückgewinnung der Bewegungsenergie aufgezeigt, den so genannten Schiebe- oder Bremsbetrieb. Im Schiebe- oder Bremsbetrieb ist der Antrieb auf Null geregelt, die Transistoren 48 der Brückenschaltungen für die Statorerregung sind vollständig abgeschaltet. Der Controller 42 schaltet oder regelt anschließend die Stromleitungen zu Brückengleichrichtern 52 auf und ermöglicht somit den Stromfluss des Induktionsstroms von den Wicklungen 36a, b des Motors, welcher sich nun im Generatorbetrieb befindet. Im Generatorbetrieb steuert der Controller 42 eine Steuerlogik 44 an, die wiederum den Betrieb von TRIACs 58 kontrolliert. Anstelle der TRIACs können natürlich auch MosFETs, Thyristoren oder dergleichen vorgesehen sein. Die TRIACs 58 sind in der Leitung zwischen den Wicklungen 36a, b und Gleichrichtern 52 angeordnet und trennen die Leitungen im Antriebsmodus (FETs 48 schalten). Am Ausgang der Gleichrichter glättet ein Kondensator 54 die Spannung, die als Gleichspannung dann an einem Gleichspannungsabgriff 56 zur Verfügung steht, beispielsweise um die Fahrzeugbatterie wieder aufzuladen.

Wird wieder ein Antrieb gewünscht, werden diese Leitungen von den Wicklungen 36a, b zu den Gleichrichtern 52 zum geeigneten Zeitpunkt (Nulldurchgang) durch Abschalten der TRIACs 58 wieder abgeschaltet. Die Transistorbrückenschaltung mit den FETs 48 kann wieder kontrolliert Strom an die Wicklungen 36a, b liefern.

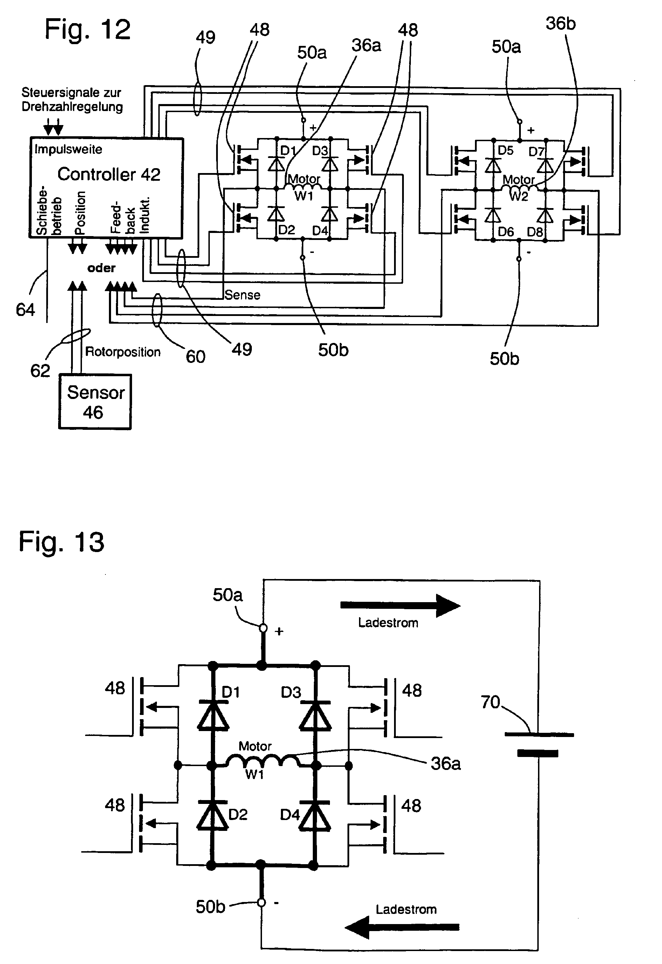

Fig. 12 zeigt eine weitere Ausführungsform der in Fig. 11 dargestellten Generator/Motor-Anordnung, bei der anstelle der Gleichrichteranordnungen 52 Dioden D 1 bis D8 parallel zu den FETs geschaltet sind. Elemente der Schaltungsanordnung, die gleich sind zu den in Fig. 11 dargestellten, sind mit gleichen Bezugszeichen versehen. Die Dioden D1 bis D8 sind invers über die Schalttransistoren geschaltet und wirken auch als Freilaufdioden zum Schutz vor Überspannungsimpulsen, z.B. bei Induktionsstößen durch schnelle Schaltvorgänge. Durch jeweils vier dieser Dioden wird ein Brückengleichrichter an jeden der Statoren gebildet (D1 bis D4 für Stator 36a (Motorwicklung W1) und D5 bis D8 für Stator 36b (Motorwicklung W2)). In Ausführungen mit mehr Statorwicklungen werden entsprechend vier Freilaufdioden je (zusätzlicher) Statorwicklung als Brückengleichrichter zugeordnet.

Durch diese Brückengleichrichteranordnungen D1-D4, D5-D8 wird mit einfachsten Mitteln die Rückgewinnung der Bewegungsenergie ermöglicht, wie z.B. im so genannten Schiebe- oder Bremsbetrieb der zuvor beschriebenen Motoren und/oder auch in der Verwendung als Anlasser-Generator für Kraftfahrzeuge und ähnliche Anwendungen. Bezeichnend ist hierbei, dass durch den elektronischen Aufbau der Leistungselektronik in Vollbrücken sich automatisch über die Freilaufdioden D1-D4, D5-D8 ein Brückengleichrichter ergibt, also die separaten Brückengleichrichteranordnungen 52 hier nicht benötigt werden.

Fig. 13 zeigt einen Detailausschnitt der Generator-/Motor-Anordnung von Fig. 12 und veranschaulicht die Wirkungsweise. Dargestellt ist hierbei das Leistungsteil einer Statorkommutierung an der Motorwicklung 36a. Der sich aus den Freilaufdioden D1 bis D4 ergebende Brückengleichrichter ist durch dicke Striche herausgehoben und richtet während der Drehung des Rotors (z.B. im Schiebebetrieb) den in der Statorwicklung generierten Wechselstrom gleich. Dadurch wird die Bewegungsenergie als Ladestrom für eine Antriebsbatterie 70 bzw. eine Starterbatterie zurückgewonnen.

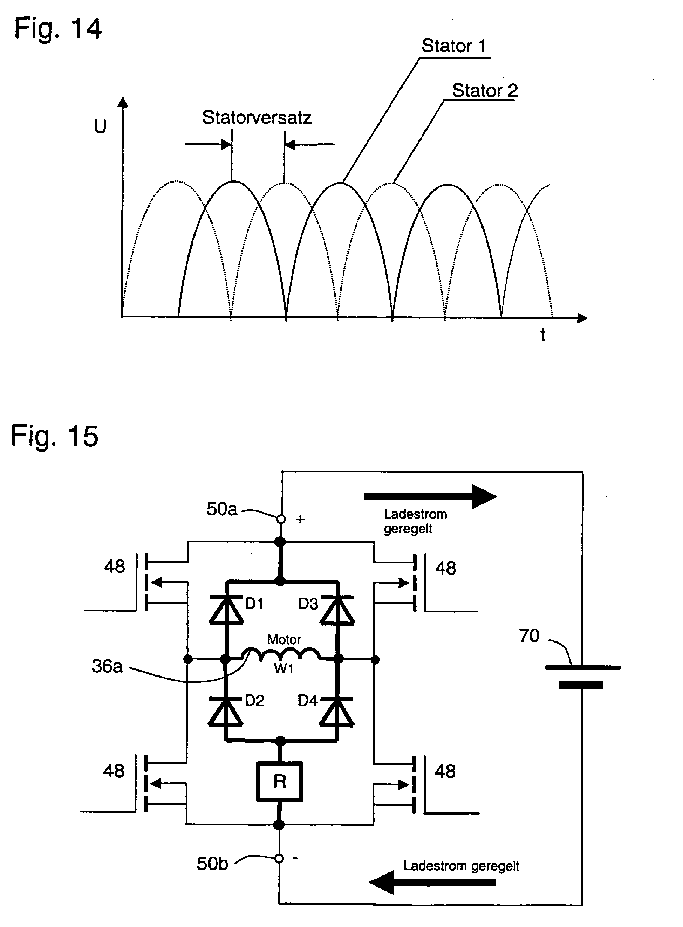

Das Zeitdiagramm der Fig. 14 zeigt die mittels der Dioden D1-D4 bzw. D5-D8 gleichgerichtete Spannung von den beiden Statoren, wobei Stator 1 der Statorwicklung 36a und Stator 2 der Statorwicklung 36b entspricht. Durch die Parallelschaltung der Brückengleichrichter D1-D4 und D5-D8 der jeweiligen Kommutierungsbrücken ergänzen sich aufgrund des mechanischen Winkelversatzes $\alpha$ der Statoren (vgl. 30a und 30b in Fig. 9) und damit der Wicklungen 36a und 36b die gleichgerichteten Ladeströme/Ladespannungen entsprechend zeitlich versetzt. Die daraus resultierende Ladegleichspannung sinkt daher nicht mehr auf Null ab und ist dadurch auch leicht zu glätten. Werden in Ausgestaltungen mehr als zwei untereinander jeweils winkelversetzt zueinander angeordnete Statoren verwendet, ist der dadurch erreichte Glättungsgrad der zusammengesetzten Gleichspannung (parallelgeschaltete Statoren) noch höher.

Fig. 15 zeigt eine Abwandlung des in Fig. 15 gezeigten Detailausschnittes. Die Schalttransistoren 48 zur Kommutierung bleiben im Ladebetrieb abgeschaltet. Durch das Einfügen einer Regelung R in den Diodenkreis wird es möglich, den Ladestrom zu regeln oder zu steuern. Wird der Motor mit der Schaltung von Fig. 15 z.B. bei einem Fahrzeug eingesetzt, kann über den Regler R die Bremskraft bedarfsabhängig variiert werden, so dass die Bremsenergie soweit möglich in einen Ladestrom überführt wird. Der Regler R umfasst beispielsweise einen MOSFET-Leistungsschalter, der über eine separate Steuerung (nicht dargestellt) angesteuert wird. Diese separate Steuerung hat die Funktion eines Ladereglers zum Laden der Antriebsbatterie 70 und/oder eines Bremskraftreglers, der die vom Motor abzuführende elektrische Energie in Abhängigkeit der gewünschten Bremsstärke regelt. Die zum Laden und/oder Bremsen zu entnehmende Energie wird durch den Regler R z.B. durch Impulsweitenmodulation der Durchschaltperioden des Leistungsschalters gesteuert.

Bei einer nicht dargestellten Ausgestaltung weist der Rotor eine Rotorbewicklung wie oben bereits dargestellt auf und anstelle des Reglers R der Fig. 15 ist ein Regler zwischen die Spannungsversorgung der Rotorbewicklung und die Rotorwicklung geschaltet, so dass das Rotormagnetfeld unter der Steuerung des Reglers veränderbar ist. Auch damit wird die durch Statorwicklungen entnehmbare elektrische Energie veränderbar.

In einer nicht dargestellten Ausgestaltung der Generator-/Motor-Anordnungen der Fig. 11 bis 15 umfasst die Anordnung nur die Elemente, die für den Generatorbetrieb benötigt werden, das heißt die Transistoren 48, der Sensor 46, der Controller 42 und die zugehörigen Leitungen 49, 60, 62, 64 entfallen. Im Falle der Fig. 11 ist die Steuerlogik um die Positionserkennung erweitert (die Signale der Sense-Leitungen 66 werden einer erweiterten Logik der Steuerlogik 44 zugeführt), um die Thyristoren 58 ansteuern zu können.

Vorteile des vorweg beschriebenen Gleichstrommotors:

- Der Motor ist bürstenlos (außer mit erregtem Rotor, zur Regelung des Motors).
- Läuft durch die synchrone oder asynchrone (siehe unten) Bauart und dem dadurch verbundenen hohen Anlaufmoment sauber und kraftvoll an (wichtig für Antriebstechnik).
- Er ist sehr einfach und kostengünstig zu bewickeln (schlängelnde Bewicklung).
- Hat eine sehr kompakte Bauweise und ist dadurch auch sehr leicht.
- Bis auf die Zuleitungen ist das gesamte Kupfer der Wicklung am Statorzahn wirksam, er besitzt dadurch einen sehr hohen Wirkungsgrad.
- Durch das Verwenden mehrerer Statorscheiben ist das Rastmoment sehr gering.
- Beliebige Anzahl von Statorscheiben möglich (mind. zwei) um die Laufruhe zu erhöhen.
- Gleichermaßen als Motor und als Generator zur Rückgewinnung der Bewegungsenergie nutzbar, z.B. im Schiebe- oder für Bremsbetrieb.

Asynchroner Betrieb des Motors und/oder des Generators

Der oben in den Fig. 9 bis 11 beschriebene Motor mit zwei Statoren 30a und 30b ist auch als Asynchronmotor ansteuerbar. Dies gilt generell für die Motoren mit mindestens zwei der oben dargestellten Statoren oder mit Wicklungszähnen am Rotor, die nach dem in Fig. 4, 5 und 10A dargestellten Schema bewickelt sind. Für die in Fig. 9 dargestellte Ausführung wird anstelle des in Fig. 10C gezeigten Phasen- bzw. Spannungssignals "Phase an Stator 30a/30b" eine Phase mit höherer Grundfrequenz angelegt. Dadurch entsteht in den Wicklungen 36a und 36b ein vorauseilendes Wanderfeld bzw. eine vorauseilende Feldrotation, das bzw. die den Rotor 1 antreibt. Die Erfassung der Drehrichtung des Motors bzw. der Relativstellung des Motors zur korrekten Einstellung der Drehrichtung erfolgt wie oben in Verbindung mit Fig. 11 beschrieben.

Auch im Falle des Phasensignals mit höherer Grundfrequenz zum Asynchronbetrieb kann die Grundfrequenz selbst wieder mit einer impulsbreitenmodulierten, höheren

Frequenz überlagert werden (analog zum in Fig. 10C unten gezeigten Phasensignal), um eine Leistungsregelung zu erhalten. Für diese Ansteuerung ist die in Fig. 11 dargestellte Schaltung einsetzbar, wobei der Controller 42 und die FETs 48 für entsprechend höhere Frequenzen ausgelegt sind.

## Weitere Ausführungsformen der elektrischen Maschine:

Ausnahme zur bürstenlosen Variante, unter Verwendung von Permanentmagneten als Rotorpole, ist die Möglichkeit der Verwendung eines stromerregten Rotors. Hierbei sind die Pole als bewickelte Rotorzähne ausgebildet. Die Stromzuführung erfolgt dann über Schleifringe, insbesondere zur Verwendung als KFZ-Lichtmaschine oder geregelten Gleichstromgenerator.

In weiterer Ausgestaltung weicht die Anzahl der Stator- und Läuferpole voneinander in geringem Maße ab und dient gegebenenfalls zur Reduzierung der Rastmomente welche bei gleicher Anzahl der Pole verstärkt auftritt.

Als Motor verwendet, ergeben sich sehr vielfältige Anwendungsmöglichkeiten, da das System modular aufgebaut werden kann. So kann man z.B. die einzelnen Statoren, hintereinander und im Winkel versetzt, schraubbar oder steckbar ausführen und so das gesamte Statorpaket je nach Bedarf beliebig erweitern. Die Verwendung einheitlicher Statoren als Gleichteil verringert die Herstellkosten, da die Grundelemente in verschiedener Kombination (Anzahl/Winkelversatz) verschiedene Generator/Motorentypen ergeben. Ein so aufgebauter bürstenloser Motor wird elektronisch kommutiert.

Kurzzusammenfassung von Aspekten der elektrischen Maschine:

- Bürstenlose elektrische Maschine synchroner oder asynchroner Bauart, mit einer Abfolge von auf dem Umfang verteilten Nuten welche als Generator und in einer Variante, mit zwei oder mehreren Statorstufen, als Generator und ebenso als Motor betrieben werden känn.
- Bei der besagten Maschine ist vorteilhaft die Anzahl der Nuten auf dem Umfang des Stators gleich groß, oder annähernd gleich groß wie die Anzahl der Magneten oder Nuten des Rotors, wobei die Magnete des Rotors um den Umfang abwechselnd gepolt sind.
- Die Feldwicklungen der Nuten sind alle in Reihe geschaltet wodurch der Strom in der Statorwicklung durch zwei Anschlussleitungen zu oder abgeführt werden kann.
- Bürstenlose elektrische Maschine wie zuvor, wobei vorteilhaft Reihenschaltung der Feldwicklungen und deren gleichen Stromrichtung in den Nuten diese gerade ausgearbeitet werden können.
- Bürstenlose elektrische Maschine wie zuvor, wobei jede der Stufen des Stators eine eigene über den Umfang ausgeführte Feldwicklung aufweist
- Bürstenlose elektrische Maschine wie zuvor, wobei vorteilhaft die Nuten der verschiedenen Stufen des Stators, von einer Stufe zur anderen um den halben Winkel, der sich aus der Anzahl der Pole ergibt, mechanisch versetzt sind.
- Die Mittelachse eines Statorzahns der einen Statorstufe fällt vorteilhaft auf eine Nut einer weiteren (zweiten) Statorstufe.
- Bei mehr als zwei Statorstufen sind vorteilhaft die Nuten der weiteren Stufen innerhalb dieses Winkels verteilt.
- Bei der Bürstenlosen elektrischen Maschine verlaufen die Magnete und Nuten des Rotors ohne Winkelversatz durchgehend über alle Statorstufen.
- Bürstenlose elektrische Maschine wie zuvor, wobei die bürstenlose Kommutierung mit Hilfe einer elektronischen Schaltung erfolgt.
- Bürstenlose elektrische Maschine wie zuvor, wobei bei eines vorteilhaften Ausgestaltung mit Hilfe eines Gleichrichters die - Verwendung als Gleichstromgenerator und mit Hilfe einer elektronischen Kommutierung gleichermaßen die Verwendung als Gleichstrommotor möglich ist, z.B. als Antrieb eines Kraftfahrzeuges und gleichzeitig als Generator zur Energierückgewinnung oder in Verwendung als Bremse oder auch in Kombination gleichzeitig für beide Zwecke.
- Verwendung der bürstenlosen elektrischen Maschine wie zuvor beispielsweise als Gleichstromgenerator, als Lichtmaschine für Kraftfahrzeuge, als Gleichstrommotor, als Anlasser für Kraftfahrzeuge, als Antriebsmotor für Kraftfahrzeuge.

**Bezugszeichenliste**

| | |
|---|---|
| 1 | Rotor |
| 3 | Stator |
| 5 | Permanentmagnet |
| 7 | Statorzahn |
| 9 | Nut |
| 11 | Wicklung |
| 12 | Wechselspannungsabgriff |
| 13 | Gleichrichter |
| 15 | Kondensator |
| 17 | Gleichspannungsabgriff |
| 19 | Wicklungsdraht |
| 21 | Wicklungsrichtung |
| 23 | Wicklungsdraht |
| 30 | Stator |
| 32 | Statorzahn |
| 34 | Nut |
| 36a,b | Wicklungsdraht |
| 40 | Motoreinheit |
| 42 | Controller |
| 44 | Steuerlogik |
| 46 | Sensor |
| 48 | FET |
| 49 | Gateleitung |
| 50a,b | Anschlussklemme |
| 52 | Gleichrichter |
| 54 | Kondensator |
| 56 | Gleichstromabgriff |

| 58 | Thyristor |
|---|---|
| 60 | Sense-Leitungen |
| 62 | Sensorleitung |
| 64 | Steuerleitung |
| 66 | Ansteuerleitung |
| 70 | Antriebsbatterie |
| D1..D8 | Diode |
| R | Regler |

**Patentansprüche**

1. Elektronisch kommutierter Gleichstrommotor oder Generator, mit
zumindest einem ersten und einem zweiten Stator (3, 30),
wobei jeder Stator eine Vielzahl am Umfang angeordnete Wicklungszähne (7, 32) mit Wicklungen und zwischen den Zähnen angeordneten Ausnehmungen (9, 34) aufweist, wobei alle Wicklungen jeweils eines jeden Stators in Reihe geschaltet sind und die Wicklungsrichtung (21) der Statorwicklungen alterniert,
einem Rotor (1), und
einer Vielzahl am Umfang des Rotors (1) angeordneten Permanentmagneten (5), deren in radiale Richtung weisende Polarität (N, S) alterniert,
wobei der erste und der zumindest zweite Stator (30a, b) koaxial zueinander angeordnet und winkelversetzt (α) zueinander ausgerichtet sind;
**dadurch gekennzeichnet, dass**
der Rotor (1) durchgängig ausgebildet ist mit sich ohne Winkelversatz über die axiale Tiefe der Statoren erstreckenden Magneten (5).

2. Motor oder Generator nach Anspruch 1, zusäatzlich mit einer Vielzahl am Umfang des Rotors (1) angeordneten Rotorwicklungszähnen mit Rotorwicklungen und zwischen den Rotorwicklungszähnen angeordneten Nuten, wobei die Wicklungsrichtung der Rotorwicklungen alterniert und wobei sich die Nuten und Rotorwicklungszähne ohne Winkelversatz über die axiale Tiefe der Statoren erstrecken.

3. Motor oder Generator nach Anspruch 1 oder 2, der als Außenläufer ausgebildet ist, bei dem der Rotor (1) die zumindest zwei Statoren (3, 30) umgibt, oder als Innenläufer ausgebildet ist, bei dem die Statorwicklungen um nach innen vorspringende Zähne der Statoren aufgewickelt sind.

4. Motor oder Generator nach Anspruch 1, 2 oder 3, wobei der Winkelversatz (α) 360°:(2·m) beträgt, wobei m = Anzahl der Zähne (32a, b) des ersten Stators (30a).

5. Motor oder Generator nach einem der Ansprüche 1 bis 4, wobei drei oder mehr mit Wicklungszähnen versehene Statoren vorgesehen sind, die koaxial und winkelversetzt zueinander ausgerichtet sind.

6. Motor oder Generator nach einem der Ansprüche 1 bis 5, wobei zumindest zwei der mit Wicklungszähnen (32a, b) versehenen Statoren (30a, b) als vorgefertigte Module vorgesehen sind.

7. Motor oder Generator nach einem der vorhergehenden Ansprüche, wobei ein Wicklungsdraht (23, 36a, 36b) mäander- oder schleifenförmig zwischen den Wicklungszähnen (7, 32a, 32b) verlegt ist.

8. Motor oder Generator nach einem der vorhergehenden Ansprüche, wobei die Anzahl der Permanentmagnete (5) von der Anzahl der Wicklungen des mit Wicklungszähnen (7, 32) versehenen Stators (3, 30a, 30b) abweicht, insbesondere das Verhältnis der Anzahl von Permanentmagneten (5) zur Anzahl von Wicklungen oder Anzahl von Wicklungen zur Anzahl von Permanentmagneten im Bereich 1,05 bis 1,3 liegt.

9. Motor oder Generator nach einem der vorhergehenden Ansprüche, wobei sich der Querschnitt der Nuten (34) zwischen den Wicklungszähnen (32) von Innen nach Außen nicht wesentlich verjüngt, insbesondere von Innen nach Außen gleich bleibt oder sich vergrößert.

10. Generatoranordnung mit einem Gleichstromgenerator nach einem der Ansprüche 1 bis 9, wobei die Wicklungen jedes Stators der elektrische Maschine jeweils eine Phasenwicklung (36a, 36b) ausbilden und die Generatoranordnung eine Gleichrichteranordnung (52; D1..D4; D5..D8) je Phasenwicklung (36a, 36b) aufweist.

11. Generatoranordnung nach Anspruch 10, mit einer Generatorsteuerschaltung (44) zum Ansteuern von zwei Gleichrichter-Leistungssehaltern (58), insbesondere TRIACs oder Thyristoren, je Phasenwicklung (36a, 36b), wobei unter der Ansteuerung der Generatorsteuerschaltung (44) die zwei Gleichrichter-Leistungsschalter (58) Verbindungsleitungen zwischen der jeweiligen Phasenwicklung (36a, 36b) und der zugeordneten Gleichrichteranordnung (52) durchschaltet.

12. Generatoranordnung nach Anspruch 10, wobei pro Phasenwicklung (36a, 36b) des Gleichstromgenerators vier Leistungsschalter (48) zugeordnet sind und die pro Phasenwicklung zugeordnete Gleichchleranordnung (D1..D4; D5..D8) durch je vier Gleichrichterelemente ausgebildet ist, wobei jedes der Gleichrichterelemente parallel zu je einem der Leistungsschalter geschaltet ist.

13. Generatoranordnung nach Anspruch 10, 11 oder 12, wobei jedem der Gleichrichteranordnungen (52; D1..D4; D5..D8) eine Reglereinheit (R) und/oder ein Filterelement (54) zugeordnet ist.

**Claims**

1. Electronically commutated direct current motor or generator, having
   at least a first and a second stator (3, 30),
   wherein each stator comprises, disposed on the circumference, a plurality of winding teeth (7, 32) having windings and recesses (9, 34) disposed between the teeth, wherein all of the windings of each stator respectively are connected in series and the winding direction (21) of the stator windings alternates,
   a rotor (1), and
   a plurality of permanent magnets (5) disposed on the circumference of the rotor (1), the polarity (N, S) of which is pointing in radial direction and is alternating,
   wherein the first and the at least second stator (30a, b) are disposed coaxially with each other and oriented angularly offset ($\alpha$) to each other;
   **characterized in that**
   the rotor (1) is continuously formed with magnets (5) extending across the axial depth of the stators without angular offset.

2. Motor or generator according to claim 1, additionally having, disposed on the circumference of the rotor (1), a plurality of rotor winding teeth having rotor windings and grooves disposed between the rotor winding teeth, wherein the winding direction of the rotor windings alternates and wherein the grooves and rotor winding teeth extend across the axial depth of the stators without angular offset.

3. Motor or generator according to claim 1 or 2, which is formed as an external rotor, in which the rotor (1) surrounds the at least two stators (3, 30), or is formed as an internal rotor, in which the stator windings are wound around inwards projecting teeth of the stators.

4. Motor or generator according to claim 1, 2 or 3, wherein the angular offset ($\alpha$) is 360°:(2·m), wherein m = number of teeth (32a, b) of the first stator (30a).

5. Motor or generator according to any one of claims 1 to 4, wherein three or more stators provided with winding teeth are provided, which are oriented coaxially and angularly offset to each other.

6. Motor or generator according to any one of claims 1 to 5, wherein at least two of the stators (30a, b) provided with winding teeth (32a, b) are provided as prefabricated modules.

7. Motor or generator according to anyone of the preceding claims, wherein a winding wire (23, 36a, 36b) is laid meander or loop-shaped between the winding teeth (7, 32a, 32b).

8. Motor or generator according to anyone of the preceding claims, wherein the number of the permanent magnets (5) differs from the number of the windings of the stator (3, 30a, 30b) provided with winding teeth (7, 32), in particular the ratio of the number of permanent magnets (5) to the number of windings or the number of windings to the number of permanent magnets is in the range of 1.05 to 1.3.

9. Motor or generator according to anyone of the preceding claims, wherein the cross-section of the grooves (34) between the winding teeth (32) does not substantially taper from inside to outside, in particular remains the same or increases from inside to outside.

10. Generator assembly having a direct current generator according to any one of claims 1 to 9, wherein the windings of each stator of the electric machine each form a phase winding (36a, 36b) and the generator assembly comprises one rectifier assembly (52; D1..D4; D5..D8) per phase winding (36a, 36b).

11. Generator assembly according to claim 10, having a generator control circuit (44) for driving two rectifier power switches (58), in particular TRIACs or thyristors, per phase winding (36a, 36b), wherein the two rectifier power switches (58) interconnect connecting lines between the respective phase winding (36a, 36b) and the associated rectifier assembly (52) under the control of the generator control circuit (44).

12. Generator assembly according to claim 10, wherein four power switches (48) are associated per phase winding (36a, 36b) of the direct current generator and the rectifier assembly (D1..D4; D5..D8) associated per phase winding is formed by each four rectifier elements, wherein each of the rectifier elements is connected in parallel with respectively one of the power switches.

13. Generator assembly according to claim 10, 11 or 12, wherein a regulator unit (R) and/or a filter element (54) is associated with each of the rectifier assemblies (52; D1..D4; D5..D8).

**Revendications**

1. Moteur à courant continu à commutation électronique ou générateur, comportant
au moins un premier et un deuxième stator (3, 30),
chaque stator présentant une pluralité de dents d'enroulement (7, 32) avec des enroulements disposées sur le pourtour et d'évidements (9, 34) disposés entre les dents, tous les enroulements de chaque stator étant branchés en série et le sens d'enroulement (21) des enroulements de stator étant alternant,
un rotor (1) et
une pluralité d'aimants permanents (5) disposés sur le pourtour du rotor (1), dont la polarité (N, S) orientée en direction radiale est alternante,
le premier et ledit au moins deuxième stator (30a, b) étant disposés coaxialement l'un à l'autre et alignés avec un décalage angulaire (α) l'un par rapport à l'autre;
**caractérisé en ce que**
le rotor (1) est réalisé d'un bout à l'autre avec des aimants (5) s'étendant sans décalage angulaire sur la profondeur axiale des stators.

2. Moteur ou générateur selon la revendication 1, comportant en plus une pluralité de dents d'enroulement de rotor avec des enroulements de rotor disposées sur le pourtour du rotor (1) et d'encoches disposées entre les dents d'enroulement de rotor, le sens d'enroulement des enroulements de rotor étant alternant et les encoches et dents d'enroulement de rotor s'étendant sans décalage angulaire sur la profondeur axiale des stators.

3. Moteur ou générateur selon la revendication 1 ou 2, qui est du type à rotor extérieur, dans lequel le rotor (1) entoure lesdits au moins deux stators (3, 30), ou du type à rotor intérieur, dans lequel les enroulements de stator sont enroulés autour de dents des stators faisant saillie vers l'intérieur.

4. Moteur ou générateur selon la revendication 1, 2 ou 3, dans lequel le décalage angulaire (α) est de 360°:(2·m), avec m = nombre de dents (32a, b) du premier stator (30a).

5. Moteur ou générateur selon une des revendications 1 à 4, dans lequel il est prévu trois ou plus stators munis de dents d'enroulement qui sont alignés coaxialement et en décalage angulaire les uns par rapport aux autres.

6. Moteur ou générateur selon une des revendications 1 à 5, dans lequel au moins deux des stators (30a, b) munis de dents d'enroulement (32a, b) sont prévus sous la forme de modules préfabriqués.

7. Moteur ou générateur selon une des revendications précédentes, dans lequel un fil d'enroulement (23, 36a, 36b) est posé en forme de méandre ou de boucle entre les dents d'enroulement (7, 32a, 32b).

8. Moteur ou générateur selon une des revendications précédentes, dans lequel le nombre d'aimants permanents (5) diffère du nombre d'enroulements du stator (3, 30a, 30b) muni de dents d'enroulement (7, 32), en particulier le rapport du nombre d'aimants permanents (5) au nombre d'enroulements ou du nombre d'enroulements au nombre d'aimants permanents est compris entre 1,05 et 1,3.

9. Moteur ou générateur selon une des revendications précédentes, dans lequel la section des encoches (34) entre les dents d'enroulement (32) ne diminue pas substantiellement de l'intérieur vers l'extérieur, en particulier reste constante ou augmente de l'intérieur vers l'extérieur.

10. Dispositif générateur avec un générateur de courant continu selon une des revendications 1 à 9, dans lequel les enroulements de chaque stator de la machine électrique forment chacun un enroulement de phase (36a, 36b) et le dispositif générateur présente un dispositif redresseur (52 ; D1...D4; D5...D8) par enroulement de phase (36a, 36b).

11. Dispositif générateur selon la revendication 10, avec un circuit de commande de générateur (44) pour la commande de deux commutateurs de puissance redresseurs (58), en particulier des triacs ou des thyristors, par enroulement de phase (36a, 36b), dans lequel, lorsqu'ils sont commandés par le circuit de commande de générateur (44), les deux commutateurs de puissance redresseurs (58) connectent des lignes de liaison entre l'enroulement de phase (36a, 36b) respectif et le dispositif redresseur (52) associé.

12. Dispositif générateur selon la revendication 10, dans lequel quatre commutateurs de puissance (48) sont associés par enroulement de phase (36a, 36b) du générateur de courant continu et le dispositif redresseur (D1...D4; D5...D8) associé par enroulement de phase est chaque fois formé de quatre éléments redresseurs, chacun des éléments redresseurs étant branché en parallèle avec un des commutateurs de puissance.

13. Dispositif générateur selon la revendication 10, 11 ou 12, dans lequel une unité de régulation (R) et/ou un élément de filtrage (54) est associé(e) à chacun des dispositifs redresseurs (52 ; D1...D4; D5...D8).

## Fig. 1A

## Fig. 1B

## Fig. 2A

Wicklungsrichtung

## Fig. 2B

Drehrichtung

## Fig. 3

## Fig. 4

Fig. 5

21    21

3

7    7

23

Fig. 6

9

23

7

1

5

3

Fig. 7B

32

34

30

Fig. 7A

32

32

30

34

34

30

## Fig. 8

32a 34a

30a 1

34b

32b

5

## Fig. 9

5 1

α

34a

32a 30a 30b

32b

34b

α

# Fig. 10A

21    21

36a — 12   1   2   3   4   5   6   7   8   9   10   11   12   30a
α

34a   32a

36a

Rotorbewegung   S   N   S   N   S   N   S   N   S   N

36b

36b

1   2   3   4   5   6   7   8   9   10   11   12   1   30b

34b   32b   5   5

## Rotorbewegung

Position1
Position2
Position3
Position4
Position5
Position6
Position7

Phase Stator 30a
an Wicklung 36a

Phase Stator 30b
an Wicklung 36b

+U
0V
-U

+U
0V
-U

# Fig. 10C

Impulsweite
an Wicklung 36a

Impulsweite
an Wicklung 36b

+U
0V
-U

+U
0V
-U

# Fig. 10B

5   1

N
S   S
N   N
S

W   W   32b

30b

34b

5   1

N
S   S
N   N
S

W   W   W   W   W   W

3

7   9

# Fig. 10D

# Fig. 11

## Fig. 12

49  48  50a  36a  48  50a  36b

Steuersignale zur
Drehzahlregelung

Impulsweite

Controller 42

Schiebe-betrieb  Position  Feed-back  Indukt.

oder

64

62

Rotorposition  60  49  50b  50b

Sensor
46

+  D1  D3  +  D5  D7
Motor  Motor
W1  W2
D2  D4  D6  D8
−  −

Sense

## Fig. 13

50a

+  Ladestrom

48  D1  D3  48
Motor
W1  36a
48  D2  D4  48

70

50b  −  Ladestrom

## Fig. 14

## Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0497317 A1
- EP 1289097 A2